# EUROPÄISCHE PATENTANMELDUNG

(11) **EP 1 873 598 A1**
(43) Veröffentlichungstag der Anmeldung: **02.01.2008**
(21) Anmeldenummer: 07012124.9
(22) Anmeldetag: 21.06.2007
(51) Int. Cl.: G05B 19/042, G06F 11/00, G05B 9/02

(54) **Schaltungsanordnung und Verfahren zum Steuern mindestens eines Aktors in einem Kraftfahrzeug**

(30) Priorität: 27.06.2006 DE 102006029514
(71) Anmelder: ATMEL Germany GmbH, 74072 Heilbronn (DE)
(72) Erfinder: Pannwitz, Axel, 01445 Radebeul (DE)
(74) Vertreter: Müller, Wolf-Christian

(57) **Zusammenfassung**

Die Erfindung betrifft eine Schaltungsanordnung zum Steuern mindestens eines Aktors in einem Kraftfahrzeug, beinhaltend einen Mikrocontroller, eine Watchdog-Schaltung mit einem aktiven Betriebsmodus zum Überwachen der Funktionsfähigkeit des Mikrocontrollers und einem Betriebsmodus herabgesetzter Aktivität, und mindestens eine vom Mikrocontroller gesteuerte periphere Einheit mit einem ersten Betriebsmodus zum Steuern mindestens eines Aktors. Erfindungsgemäß weist die periphere Einheit einen zweiten Betriebsmodus auf und ist ausgebildet, den Aktor in einen sicheren zustand zu überführen und/oder ihn in diesem zu halten, wenn sich die periphere Einheit im zweiten Betriebsmodus befindet, und ist die Schaltungsanordnung ausgebildet, die periphere Einheit zumindest immer dann im zweiten Betriebsmodus zu betreiben, wenn sich die Watchdog-Schaltung im Betriebsmodus herabgesetzter Aktivität befindet. Die Erfindung betrifft weiterhin ein entsprechendes Verfahren zum Steuern mindestens eines Aktors in einem Kraftfahrzeug.

## Beschreibung

Die vorliegende Erfindung betrifft eine Schaltungsanordnung und ein Verfahren zum Steuern mindestens eines Aktors in einem Kraftfahrzeug.

Die Erfindung liegt auf dem Gebiet der Steuerung von Aktoren, wie z.B. Elektromotoren, Elektromagneten, Heizdrähte, die vielfach an unterschiedlichsten Stellen in modernen Kraftfahrzeugen verbaut sind. Solche Aktoren, oft auch als Aktuatoren bezeichnet, dienen beispielsweise dem Antrieb von Scheibenwischern, der Einstellung von Scheinwerfern, Sitzen, Thermostatventilen, Drosselklappen, Turboladern etc..

Aus DE 102 55 430 A1 ist eine Schaltungsanordnung zum Steuern eines Insassenschutzsystems mit einem Mikroprozessor, einer Watchdog-Schaltung und Zündendstufen zum Auslösen von Airbags, Gurtstraffern etc: bekannt. Die Watchdog-Schaltung weist hierbei einen aktiven Modus zum Überwachen des Mikroprozessors sowie einen inaktiven Modus auf, in dem die Überwachung des Mikroprozessors zur Reduzierung des Stromverbrauchs unterbleibt, wenn sich der Mikroprozessor in einem Ruhezustand befindet.

Nachteilig ist hierbei, daß es ohne weitere aufwendige Maßnahmen nicht möglich ist, z.B. einen Selbsttest des Mikroprozessors durchzuführen oder neuen Programmcode für den Mikroprozessor zu empfangen und in einem nichtflüchtigen Speicher abzuspeichern, da eine fehlerhafte Ansteuerung der Zündendstufen durch den Mikroprozessor und damit eine ungewollte Auslösung von Airbags, Gurtstraffern etc. nicht systematisch ausgeschlossen ist. Für solche Test- oder Download-Maßnahmen ist in der Regel ein zeit- und kostenintensiver Ausbau der kompletten, oft "tief" im Fahrzeug verbauten Baugruppe mit der Schaltungsanordnung in einer Werkstatt erforderlich.

Vor diesem Hintergrund liegt der Erfindung die Aufgabe zugrunde, eine einfach und kostengünstig zu implementierende Schaltungsanordnung anzugeben, die den mindestens einen Aktor auch dann zuverlässig und sicher ansteuert, wenn sich der Mikrocontroller bzw. -prozessor nicht im normalen, den Aktor steuernden Betriebsmodus befindet, sondern z.B. einen Selbsttest durchführt oder neuen Programmcode zur verbesserten Aktor-Steuerung empfängt. Es ist weiterhin die Aufgabe der Erfindung, ein entsprechendes Verfahren anzugeben.

Erfindungsgemäß wird diese Aufgabe gelöst durch eine Schaltungsanordnung mit den Merkmalen des Patentanspruchs 1 und ein Verfahren mit den Merkmalen des Patentanspruchs 18.

Die erfindungsgemäße Schaltungsanordnung zum Steuern mindestens eines Aktors in einem Kraftfahrzeug beinhaltet (a) einen Mikrocontroller, (b) eine Watchdog-Schaltung mit einem aktiven Betriebsmodus W1 zum Überwachen der Funktionsfähigkeit des Mikrocontrollers und einem Betriebsmodus herabgesetzter Aktivität W2, und (c) mindestens eine vom Mikrocontroller gesteuerte periphere Einheit mit einem ersten Betriebsmodus P1 zum Steuern mindestens eines Aktors, wobei (d) die periphere Einheit einen zweiten Betriebsmodus P2 aufweist und ausgebildet ist, den Aktor in einen sicheren Zustand zu überführen bzw. (und/oder) ihn in diesem zu halten, wenn sich die periphere Einheit im zweiten Betriebsmodus P2 befindet, und (e) die Schaltungsanordnung ausgebildet ist, die periphere Einheit zumindest immer dann im zweiten Betriebsmodus P2 zu betreiben, wenn sich die Watchdog-Schaltung im Betriebsmodus herabgesetzter Aktivität W2 befindet.

Das erfindungsgemäße Verfahren zum Steuern mindestens eines Aktors in einem Kraftfahrzeug mit einem Mikrocontroller, einer Watchdog-Schaltung mit einem aktiven Betriebsmodus W1 zum Überwachen der Funktionsfähigkeit des Mikrocontrollers und einem Betriebsmodus herabgesetzter Aktivität W2, und mit mindestens einer vom Mikrocontroller gesteuerten peripheren Einheit mit einem ersten Betriebsmodus P1 zum Steuern mindestens eines Aktors, beinhaltet die Schritte (a) Betreiben der peripheren Einheit in einem zweiten Betriebsmodus P2 zumindest immer dann, wenn sich die Watchdog-Schaltung im Betriebsmodus herabgesetzter Aktivität W2 befindet, und (b) Überführen bzw. (und/oder) Halten des Aktors in einen/einem sicheren Zustand, wenn sich die periphere Einheit im zweiten Betriebsmodus P2 befindet.

Das Wesen der Erfindung besteht darin, den Aktor bzw. die Aktoren in einen sicheren, d.h. keine Schäden, Störungen, Fehlfunktionen oder dergleichen verursachenden Zustand zu bringen und/oder ihn in einem solchen Zustand zu halten, wenn sich die periphere Einheit im zweiten Betriebsmodus P2 befindet, und die periphere Einheit zumindest immer dann im zweiten Betriebsmodus P2 zu betrieben, wenn sich die Watchdog-Schaltung im Betriebsmodus herabgesetzter Aktivität W2 befindet. Unter dem Betriebsmodus "herabgesetzter Aktivität" ist hierbei zu verstehen, daß die Watchdog-Schaltung in diesem Modus die Funktionsfähigkeit des Mikrocontrolles nicht oder im Vergleich zum aktiven Betriebsmodus weniger genau überwacht. Die periphere Einheit ist vorzugsweise als Treiberschaltung zum steuern des Aktors bzw. der Aktoren ausgebildet.

Hierdurch wird der Aktor vorteilhaft auch dann zuverlässig und sicher angesteuert, wenn sich der Mikrocontroller bzw. -prozessor nicht im normalen Betriebsmodus befindet, in dem er den Aktor ansteuert, sondern z.B. einen Selbsttest durchführt oder neuen Programmcode empfängt, ohne daß weitere aufwendige und kostenintensive Maßnamen, wie ein Ausbau der kompletten Baugruppe aus dem Fahrzeug erforderlich sind oder aber zusätzliche Sicherungsschalter und/oder zusätzliche Leitungsverbindungen (und damit zusätzliche Anschlüsse) von einem übergeordneten Steuerrechner zur Schaltungsanordnung oder den Aktoren vorgesehen werden müssen. Auch eine Unterbrechung der Spannungsversorgung der Aktoren ist vorteilhaft nicht erforderlich.

Vorteilhafte Ausgestaltungen und Weiterbildungen der Erfindung sind den abhängigen Ansprüchen sowie der Beschreibung unter Bezugnahme auf die Zeichnung zu entnehmen.

In einer vorteilhaften Ausgestaltung der Schaltungsanordnung und des Verfahrens wird die periphere Einheit spätestens dann, vorzugsweise vorher, in den zweiten Betriebsmodus P2 überführt, wenn die Watchdog-Schaltung in den Betriebsmodus herabgesetzter Aktivität W2 überführt wird bzw. ist. Hierdurch wird eine besonders sichere und zuverlässige Aktoransteuerung erreicht. Indem die periphere Einheit vor der Umschaltung der Watchdog-Schaltung in den Modus P2 wechselt, wird ermöglicht, die Zeitspanne, die der Aktor maximal benötigt, um den sicheren Zustand zu erreichen, zu berücksichtigen, so daß der Aktor den sicheren Zustand im wesentlichen dann erreicht, wenn die Watchdog-Schaltung in den Modus W2 umgeschaltet ist bzw. wird.

In einer weiteren vorteilhaften Ausgestaltung der Schaltungsanordnung und des Verfahrens wird die periphere Einheit allenfalls dann im ersten Betriebsmodus P1 betrieben, wenn sich die watchdog-Schaltung im aktiven Betriebsmodus W1 befindet. Vorzugsweise wird die periphere Einheit frühestens dann in den ersten Betriebsmodus P1 überführt, wenn die Watchdog-Schaltung in den aktiven Betriebsmodus W1 überführt wird bzw. ist. Hierdurch wird vorteilhaft die Zeitspanne begrenzt bzw. verkürzt, in der der Aktor im sicheren Zustand verharrt und damit nicht für seine eigentliche Funktion zur Verfügung steht.

In einer vorteilhaften Ausgestaltung der Schaltungsanordnung ist der Mikrocontroller ausgebildet, die periphere Einheit vom ersten zum zweiten oder/und vom zweiten zum ersten Betriebsmodus zu überführen. Eine solche Schaltungsanordnung ist besonders einfach und kostengünstig zu implementieren.

In einer weiteren vorteilhaften Ausgestaltung der Schaltungsanordnung und des Verfahrens wird neuer Programmcode für den Mikrocontroller nur dann abgespeichert, wenn sich die Watchdog-Schaltung im Betriebsmodus herabgesetzter Aktivität W2 befindet, und/oder ein Selbsttest des Mikrocontrollers nur dann durchgeführt, wenn sich die Watchdog-Schaltung im Betriebsmodus herabgesetzter Aktivität W2 befindet. Hierdurch wird vorteilhaft sichergestellt, daß ein Download von Programmcode und/oder ein Selbsttest ohne die Gefahr einer fehlerhaften Ansteuerung des Aktors bewerkstelligt werden kann.

In einer weiteren vorteilhaften Ausgestaltung der Schaltungsanordnung und des Verfahrens reagiert die periphere Einheit ausschließlich auf genau ein vorbestimmtes Kommando, wenn sie sich im zweiten Betriebsmodus P2 befindet, und wechselt in den ersten Betriebsmodus P1, wenn sie das vorbestimmte Kommando empfängt. Hierdurch wird eine besonders sichere und zuverlässige Aktoransteuerung erreicht, bei der Fehlansteuerungen praktisch ausgeschlossen sind.

Die Erfindung wird nachfolgend anhand der in den schematischen Figuren der Zeichnung angegebenen Ausführungsbeispiele näher erläutert. Hierbei zeigen
Fig. 1 ein Kraftfahrzeug mit einer erfindungsgemäßen Schaltungsanordnung;
Fig. 2 ein Ausführungsbeispiel einer erfindungsgemäßen Schaltungsanordnung; und
Fig. 3 ein Ausführungsbeispiel eines erfindungsgemäßen Verfahrens.

In den Figuren sind gleiche und funktionsgleiche Elemente und Signale - sofern nicht anders angegeben - mit denselben Bezugszeichen versehen.

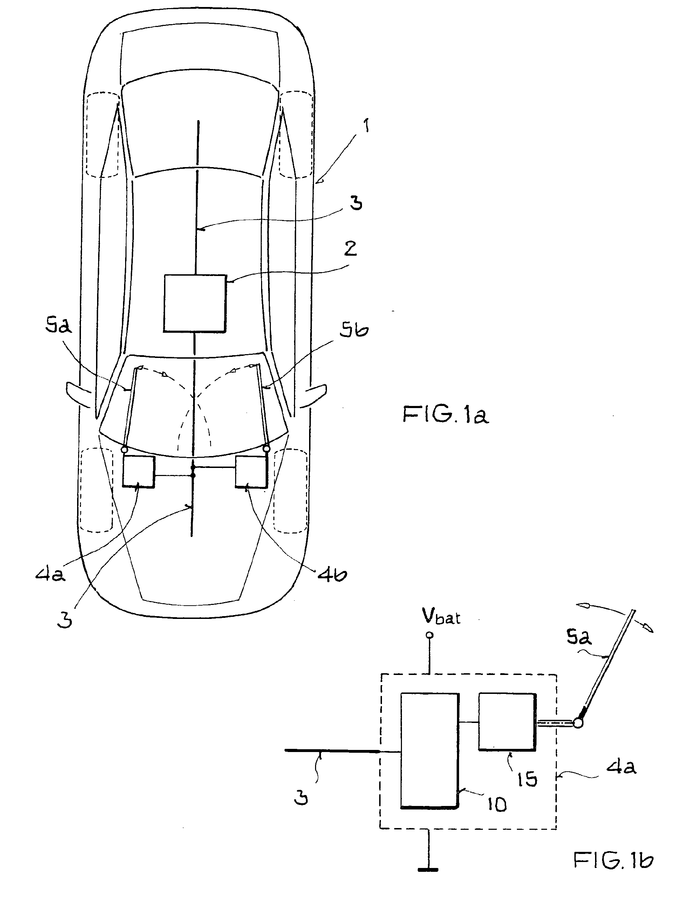

**Figur 1** zeigt ein Kraftfahrzeug mit einer erfindungsgemäßen Schaltungsanordnung.

Gemäß der Draufsicht in Fig. 1a weist das Kraftfahrzeug 1 ein Zentralsteuergerät 2 mit einem übergeordneten Steuerrechner auf, der über einen seriellen Steuerungsbus 3 mit einer Vielzahl von Fahrzeugkomponenten verbunden ist. Bei den vom Steuerrechner gesteuerten Fahrzeugkomponenten handelt es sich beispielsweise um die dargestellten Baugruppen (Steuergeräte) 4a, 4b zur Steuerung der Frontscheibenwischer 5a, 5b oder aber um andere Baugruppen zur Steuerung von Scheinwerfern, Sitzen, Turboladern, Ventile etc., die an unterschiedlichsten Stellen im Kraftfahrzeug 1 verbaut sind. Viele dieser Fahrzeugkomponenten weisen einen oder mehrere Aktoren (auch Aktuatoren genannt) auf, die elektrische Energie in andere Energieformen, wie z.B. kinetische, potentielle, magnetische, Lichtenergie, Schallenergie und/oder thermische Energie umsetzen. So kann es sich bei einem Aktor zum Beispiel um einen Elektromotor, einen Elektromagneten, einen Heizdraht etc. handeln, wobei der Aktor zum Antrieb eines Scheibenwischers, zur Einstellung eines Scheinwerfers (Leuchtweite, Kurvenlicht), eines Sitzes (Höhe, Neigung etc.), einer Drosselklappe, eines Turboladers (AnsteIlwinkel), eines Thermostatventils im Kühlwasserkreislauf etc. dient.

Der serielle Steuerungsbus 3 ist beispielsweise als LIN-Bus (local interconnect network) oder als CAN-Bus (controller area network) ausgebildet.

Als Beispiel für eine der o.g. Fahrzeugkomponenten zeigt Fig. 1b ein Blockschaltbild der Baugruppe 4a zur Steuerung des Frontscheibenwischers 5a aus Fig. 1a. Die Baugruppe 4a weist einen Aktor 15 in Form eines Elektromotors zur Steuerung (Antrieb) des Frontscheibenwischers 5a sowie eine erfindungsgemäße Schaltungsanordnung 10 auf. Die Schaltungsanordnung 10 ist mit dem Aktor 15 und über den Steuerungsbus 3 mit dem Steuerrechner 2 (Fig. 1a) verbunden. Weiterhin ist die Baugruppe zur Energieversorgung der schaltungsanordnung 10 und des Aktors 15 über einen Anschluß der Baugruppe mit der Fahrzeugbatterie verbunden, an dem die Batteriespannung Vbat anliegt.

Die Schaltungsanordnung 10 steuert den Elektromotor 15 so an, daß der Frontscheibenwischer 5a einerseits möglichst effizient Nässe von der Frontscheibe entfernt und andererseits keine anderen Fahrzeugteile am Rand der Windschutzscheibe, wie z.B. die A-Säule berührt. Sind die beiden Frontscheibenwischer 5a, 5b nicht über ein Gestänge miteinander verbunden, so ist außerdem sicherzustellen, daß sich die beiden Frontscheibenwischer im Betrieb nicht gegenseitig berühren.

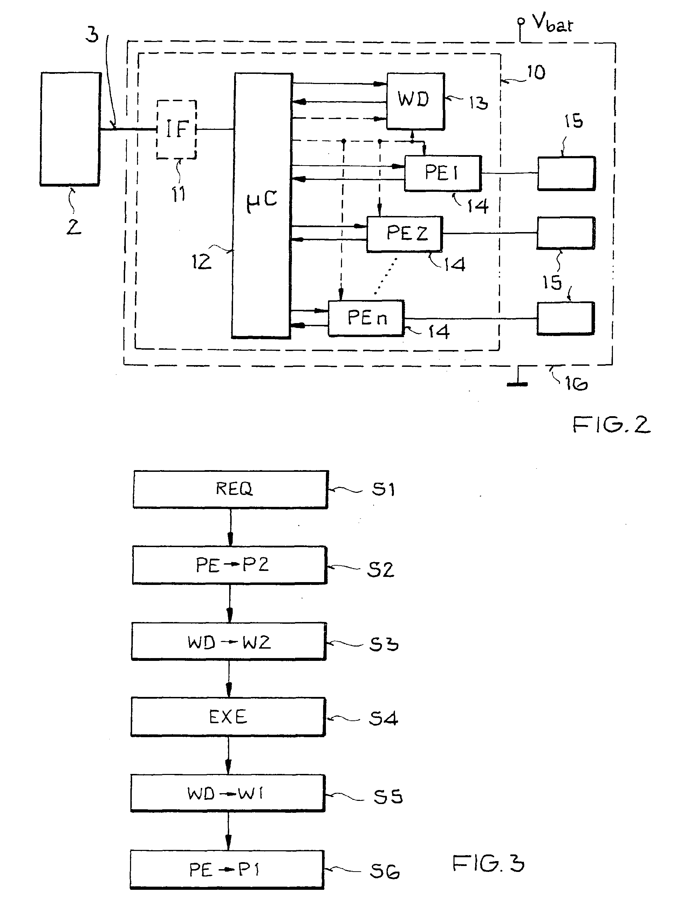

**Figur 2** zeigt ein Blockschaltbild eines Ausführungsbeispiels einer erfindungsgemäßen Schaltungsanordnung zum Steuern mindestens eines Aktors. Die Schaltungsanordnung 10 weist eine optionale Schnittstelleneinheit (interface, IF) 11, einen Mikrocontroller bzw. -prozessor (µC) 12, eine Watchdog-Schaltung (WD) 13 sowie insgesamt n periphere Einheiten (PE1, PE2, ..., PEn) 14 auf, wobei die Anzahl n der peripheren Einheiten mindestens eins beträgt (n ≥1).

Neben der Schaltungsanordnung 10 sind insgesamt m der Schaltungsanordnung 10 zugeordnete Aktoren 15 (m ≥1) vorgesehen, wobei im exemplarischen Fall der Fig. 2 die Zahl m der Aktoren 15 mit der Zahl n der peripheren Einheiten 14 übereinstimmt (m=n). Die Aktoren setzen die zugeführte elektrische Energie in andere Energieformen um, z.B. in kinetische, potentielle, magnetische, Lichtenergie, Schallenergie und/oder thermische Energie. Vorzugsweise sind die Aktoren 15 als Elektromotor, Elektromagnet oder Heizdraht ausgebildet und dienen insbesondere dem Antrieb von Scheibenwischern, der Einstellung von Scheinwerfern, Sitzen, Thermostatventilen, Drosselklappen, Turboladern etc..

weiterhin ist vorzugsweise ein übergeordneter Steuerrechner 2 des Zentralsteuergeräts (siehe Fig. 1) vorgesehen.

Während die Schaltungsanordnung 10 vorzugsweise in räumlicher Nähe zu mindestens einem ihr zugeordneten Aktor 15 angeordnet ist, befindet sich die Schaltungsanordnung 10 in der Regel nicht in räumlicher Nähe zum übergeordneten Steuerrechner 2. In einer bevorzugten Ausführungsform sind die Schaltungsanordnung 10 sowie "ihre" Aktoren 15 Teil ein und derselben Baugruppe (Steuergerät) 16, die dort im Kraftfahrzeug eingebaut ist, wo sich der Aktor bzw. die Aktoren befinden, d.h. in der Nähe eines Scheibenwischermotors (siehe Bezugszeichen 4a, 4b in Fig. 1a), Scheinwerfer-, Sitzmotors etc.. Der übergeordnete Steuerrechner 2 bzw. das Zentralsteuergerät befindet sich demgegenüber oft an einer zentralen Stelle des Kraftfahrzeuges, z.B. im Fahrzeugtunnel (Fig. 1a).

Im Falle der vorstehend mit Bezug auf Fig. 1 beschriebenen Anwendung zur Steuerung von Scheibenwischermotoren ist eine erste Baugruppe 16 mit einer (eine erste periphere Einheit aufweisenden) ersten Schaltungsanordnung 10 und einem ersten Elektromotor 15 in der Nähe des rechten Frontscheibenwischers und eine zweite Baugruppe 16 mit einer (eine zweite periphere Einheit aufweisenden) zweiten Schaltungsanordnung 10 und einem zweiten Elektromotor 15 in der Nähe des linken Frontscheibenwischers im Kraftfahrzeug angeordnet.

Der Mikrocontroller 12 bzw. die Schnittstelleneinheit 11 ist über den seriellen Steuerungsbus 3 (LIN-, CAN-Bus etc.) mit dem übergeordneten Steuerrechner 2 verbunden. Außerdem ist der Mikrocontroller 12 mit der Watchdog-Schaltung 13 und mit jeder der peripheren Einheiten 14 verbunden. Jede der n peripheren Einheiten 14 ist mit mindestens einem Aktor 15 verbunden; im exemplarischen Fall der Fig. 2 ist jede periphere Einheit mit genau einem Aktor 15 verbunden.

Der Mikrocontroller 12 steuert die weiteren Komponenten der Schaltungsanordnung 10, insbesondere die watchdog-Schaltung 13 und die peripheren Einheiten 14 zum Steuern der Aktoren 15. Vorzugsweise kommuniziert der Mikrocontroller 12 außerdem ggf. über die Schnittstelleneinheit 11 mit dem übergeordneten Steuerrechner 2, der die Schaltungsanordnung 10 steuert.

Die Schnittstelleneinheit 11 dient hierbei als Pegelumsetzer zum Umsetzen von Spannungswerten des seriellen Steuerungsbus (LIN, CAN etc.) in andere, z.B. Mikrocontroller-spezifische Spannungswerte und umgekehrt. Vorzugsweise ist die Schnittstelleneinheit 11 als kurzschluß- und überlastungssicherer Spannungswandler mit genau definierten Signalformungsanforderungen ausgebildet.

Die Watchdog-Schaltung (WD) 13, die auch als Sicherheits-Zeitgeber-Einheit bezeichnet wird, weist einen aktiven Betriebsmodus W1 zum Überwachen der Funktionsfähigkeit des Mikrocontrollers 12 und einen Betriebsmodus herabgesetzter Aktivität W2 auf, in dem sie die Funktionsfähigkeit des Mikrocontrolles 12 nicht oder im Vergleich zum aktiven Modus W1 weniger genau überwacht.

Zur Überwachung seiner Funktionsfähigkeit gibt der Mikrocontroller 12 in bestimmten zeitlichen Abständen sog. Triggerimpulse an die Watchdog-Schaltung 13 ab. Die watchdog-Schaltung 13 überprüft, ob diese Triggerimpulse bestimmte Anforderungen erfüllen und erzeugt ein Reset-Signal für den Mikrocontroller, wenn die Anforderungen nicht erfüllt sind. Die Anforderungen an die Triggerimpulse beziehen sich hierbei auf deren Vorhandensein, Anzahl, Pulsperiode, Pulsbreite etc..

Vorzugsweise erzeugt die Watchdog-Schaltung 13 im Modus W1 ein Reset-Signal, wenn die Pulsperiode der Triggerimpulse einen vorgegebenen Minimalwert unterschreitet oder einen vorgegebenen Maximalwert überschreitet. Ein solcher Modus wird auch als "Fenster-MOdus" bezeichnet. Im Modus W2 wird hingegen nur dann ein Reset-Signal abgegeben, wenn ein Maximalwert überschritten wird.

In einer weiteren Ausführungsform erzeugt die Watchdog-Schaltung 13 im Modus W1 ein Reset-Signal gemäß dem o.g. Fenster-Modus, während sie im Modus W2 ein Reset-Signal abgibt, wenn sie (überhaupt) Triggerimpulse empfängt.

In einer dritten Ausführungsform erzeugt die Watchdog-Schaltung 13 im Modus W1 ein Reset-Signal, wenn die Pulsperiode der Triggerimpulse einen vorgegebenen Maximalwert überschreitet, während sie im Modus W2 ein Reset-Signal abgibt, wenn sie (überhaupt) Triggerimpulse empfängt.

Das Umschalten der Watchdog-Schaltung 13 zwischen den Betriebs-Modi W1 und W2 wird - evtl. auf Veranlassung des übergeordneten Steuerrechners 2 und/oder auf Veranlassung durch ein an einem weiteren Eingang des Mikrocontrollers anliegendes Signal - durch den Mikrocontroller 12 gesteuert. Dies ist in Fig. 2 durch den gestrichelten Pfeil vom Mikrocontroller 12 zur Watchdog-Schaltung 13 veranschaulicht.

Jeder Aktor 15 weist einen "sicheren" Zustand auf, in dem Schäden, Störungen oder Fehlfunktionen ausgeschlossen sind. Bei einem Elektromotor zur Steuerung eines ersten Frontscheibenwischers, der nicht über ein Gestänge mit dem zweiten Frontscheibenwischer verbunden ist, kann dies z.B. jede Scheibenwischerposition sein, die eine Berührung des zweiten Frontscheibenwischers und anderer Fahrzeugteile (A-Säule etc.) ausschließt. Beispielsweise kann dies eine Position nahe der und im wesentlichen parallel zur jeweils näheren A-Säule sein. Im Falle eines Elektromotors zur Einstellung eines Frontscheinwerfers entspricht der sichere Zustand beispielsweise einer Normaleinstellung, in der die Strahlrichtung des Scheinwerfers in einer horizontalen Ebene liegt (Normaleinstellung der Leuchtweite) oder parallel zur Fahrzeuglängsachse (Normaleinstellung des Kurvenlichts) verläuft. Bei einem Elektromagneten für ein Thermostatventil im Kühlwasserkreislauf besteht der sichere Zustand beispielsweise im vollständig geöffneten Zustand oder aber in einem eine überhitzung zuverlässig verhindernden Zustand. Im Falle einer Drosselklappe stellt z.B. der geschlossene Zustand den sicheren Zustand dar, während beim Turbolader ein Anstellwinkel, der eine Zerstörung des Turboladers ausschließt, den sicheren Zustand charakterisiert.

Die peripheren Einheiten 14 sind vorzugsweise als Treiberschaltungen zum Steuern des/der jeweils zugeordneten Aktors/Aktoren 15 ausgebildet. Jede periphere Einheit 14 weist einen ersten Betriebsmodus P1 und einen zweiten Betriebsmodus P2 auf. Im ersten Betriebsmodus P1 setzt jede periphere Einheit 14 Kommandos vom Mikrocontroller 12 in entsprechende Steuersignale zum Steuern "ihres" Aktors bzw. "ihrer" Aktoren 15 um. Befindet sich die periphere Einheit 14 dagegen im zweiten Betriebsmodus P2, so hält sie ihre(n) Aktor(en) 15 im vorstehend beschriebenen sicheren Zustand, indem sie ein Steuersignal erzeugt, das diesem sicheren Zustand entspricht und dieses dann z.B. konstant hält, so daß der sichere Zustand beibehalten wird. Vorzugsweise überführt die periphere Einheit 14 zunächst die Aktoren in den sicheren Zustand, wenn die periphere Einheit 14 vom ersten in den zweiten Betriebsmodus umgeschaltet wird. Je nach Ausgestaltung der Schaltungsanordnung und der Aktoren kann dies die Mitwirkung des Mikrocontrollers 12 in Form von weiteren Kommandos erfordern.

Das Halten bzw. überführen in den sicheren Zustand wird hierbei über dieselben (Steuer)Leitungen zwischen den peripheren Einheiten und den Aktoren bewerkstelligt, über die die Aktoren im Modus P1 von den peripheren Einheiten auch gesteuert werden. Insbesondere wird das Überführen bzw. Halten im sicheren Zustand nicht erreicht, indem die Aktoren von der Energieversorgung getrennt werden.

Erfindungsgemäß werden die peripheren Einheiten 14 zumindest immer dann im Betriebsmodus P2 betrieben, wenn sich die watchdog-Schaltung 13 im Betriebsmodus W2 befindet und damit den Mikrocontroller 12 nicht oder weniger genau überwacht. Der Modus P2 ist also immer dann aktiv, wenn auch der Modus W2 aktiv ist, ggf. aber auch darüber hinaus, d.h. wenn sich die Watchdog-Schaltung im aktiven Betriebsmodus W1 befindet.

Im Betriebsmodus P1 werden die peripheren Einheiten 14 dagegen allenfalls dann betrieben, wenn sich die Watchdog-Schaltung im aktiven Betriebsmodus W1 befindet. Der Modus P1 kann also nur dann aktiv sein, wenn auch der Modus W1 aktiv ist, nicht jedoch, wenn W2 aktiv ist. Andererseits muß P1 nicht immer aktiv sein, wenn W1 aktiv ist, so daß in Zeitabschnitten, in denen W1 aktiv ist, entweder P1 oder P2 aktiv sein kann.

Vorzugsweise reagieren die peripheren Einheiten 14 ausschließlich auf genau ein vorbestimmtes Kommando, wenn sie sich im Betriebsmodus P2 befinden, und wechseln in den Betriebsmodus P1, wenn sie das vorbestimmte Kommando vom Mikrocontroller 12 empfangen.

In einer bevorzugten Ausführungsform ist der Mikrocontroller 12 ausgebildet, die peripheren Einheiten 14 vom ersten Modus P1 zum zweiten Modus P2 oder/und umgekehrt zu überführen. In Fig. 2 ist dies mit Hilfe von gestrichelten Pfeilen vom Mikrocontroller 12 zu den peripheren Einheiten 14 dargestellt. Die Modus-Umschaltung der peripheren Einheiten 14 (P1/P2) und der watchdog-Schaltung 13 (W1/W2) kann hierbei mittels unterschiedlicher Signale oder aber desselben Signals über einen oder mehrere Ausgänge des Mikrocontrollers erfolgen.

Zeitlich erfolgt die Umschaltung der peripheren Einheiten 14 vom Modus P1 in den Modus P2 spätestens dann, wenn die Watchdog-Schaltung 13 in den Modus W2 überführt wird bzw. ist. Vorzugsweise werden die peripheren Einheiten 14 hierbei *vor* der Watchdog-Schaltung 13 umgeschaltet, spätestens jedoch im wesentlichen gleichzeitig mit der Watchdog-Schaltung 13.

Nachdem die peripheren Einheiten 14 in den Modus P2 und die Watchdog-Schaltung 13 in den Modus W2 überführt sind, kann der Mikrocontroller 12 risikolos z.B. einen Selbsttest durchführen oder über den Steuerungsbus 3 neuen Programmcode vom übergeordneten Steuerrechner 2 empfangen und in einem nichtflüchtigen Speicher abspeichern, ohne daß die Gefahr einer Fehlansteuerung von Aktoren besteht, da sich diese zuverlässig im sicheren Zustand befinden.

Die einzige Gefahr besteht nun darin, daß der Mikrocontroller 12 fehlerhafterweise das vorstehend erläuterte vorbestimmtes Kommando zum Zurückschalten der peripheren Einheiten 14 in den Modus P1 abgibt, *bevor* der Download bzw. Selbsttest ordnungsgemäß abgeschlossen ist. Um auch diese Gefahr auszuschließen, werden die Kommandos des Mikrocontroller 12 zum Umschalten der peripheren Einheiten 14 vorzugsweise nicht nur den peripheren Einheiten 14, sondern auch der Watchdog-Schaltung 13 übermittelt, wie in Fig. 2 durch die gestrichelten Pfeile vom Mikrocontroller 12 zu den peripheren Einheiten 14 *und* der Watchdog-Schaltung 13 veranschaulicht ist. Dies eröffnet der Watchdog-Schaltung 13 die Möglichkeit, ein Reset-Signal an den Mikrocontroller 12 abzugeben, wenn sie das vorbestimmte Kommando zum Zurückschalten der peripheren Einheiten 14 in den Modus P1 erhält, solange sie selbst im Modus W2 ist.

Durch das Reset-Signal wird das Zurückschalten der peripheren Einheiten 14 in den Modus P1 bzw. der Aktoren in einen "unsicheren" Zustand verhindert.

Das Zurückschalten der peripheren Einheiten 14 vom Modus P2 in den Modus P1 erfolgt frühestens dann, wenn die Watchdog-Schaltung 13 in den Modus W1 überführt wird bzw. ist. Vorzugsweise werden die peripheren Einheiten 14 hierbei im wesentlichen gleichzeitig mit der Watchdog-Schaltung 13 umgeschaltet.

In einer alternativen Ausführungsform ist die Watchdog-Schaltung 13 ausgebildet, die peripheren Einheiten 14 vom Modus P1 zum Modus P2 oder/und umgekehrt zu überführen. Hierzu ist die Watchdog-Schaltung 13 mit den peripheren Einheiten 14 verbunden (nicht in Fig. 2 dargestellt), während die gestrichelten Pfeile vom Mikrocontroller 12 zu den peripheren Einheiten 14 entfallen. In diesem Falle erhält die Watchdog-Schaltung 13 vom Mikrocontroller 12 zusätzlich die Kommandos zum Umschalten der peripheren Einheiten 14 oder aber die Watchdog-Schaltung 13 erzeugt diese selbst auf der Basis der Kommandos zum umschalten der Watchdog-Schaltung 13. Der Mikrocontroller 12 und/oder die watchdog-Schaltung 13 stellen auch hier sicher, daß die Modus-Umschaltungen der peripheren Einheiten 14 und der Watchdog-Schaltung 13 in der vorstehend beschriebenen logischen und zeitlichen Abfolge erfolgen.

Die vorstehend beschriebene Schaltungsanordnung 10 ist vorteilhaft einfach und kostengünstig zu implementieren. In einer vorteilhaften Ausführungsform sind die watchdog-Schaltung 13, die periphere(n) Einheit(en) 14 und ggf. die Schnittstelleneinheit 11 Teil einer in Fig. 2 nicht dargestellten integrierten Schaltung, z.B. eines ASIC (application specific integrated circuit) oder ASSP (application specific standard product), während der Mikrocontroller 12 als ebenfalls nicht dargestellte separate integrierte Schaltung realisiert ist. Vorzugsweise weist die Schaltungsanordnung 10 nur eine z.B. als ASIC oder ASSP ausgeführte integrierte Schaltung auf, die die Funktionen sämtlicher Einheiten 11-14 wahrnimmt.

**Figur 3** zeigt ein Flußdiagramm eines erfindungsgemäßen Verfahrens zum Steuern mindestens eines Aktors in einem Kraftfahrzeug.

Soll beispielsweise für eine verbesserte Steuerung der Aktoren neuer Programmcode im Mikrocontroller gespeichert oder aber ein Selbsttest der Funktionsfähigkeit des Mikrocontrollers durchgeführt werden, so sendet der Steuerrechner 2 in Schritt S1 ggf. eine entsprechende Anforderung (request, REQ) an den Mikrocontroller 12 (siehe auch Fig. 2). Daraufhin überführt vorzugsweise der Mikrocontroller in Schritt S2 die periphere(n) Einheit(en) PE in den Modus P2, so daß die Aktoren in einen sicheren Zustand gebracht werden. In Schritt S3, der vorzugsweise später oder aber im wesentlichen gleichzeitig mit Schritt S2 ausgeführt wird, schaltet der Mikrocontroller die Watchdog-Schaltung WD in den Modus W2. Nach erfolgter Umschaltung der Watchdog-Schaltung führt der Mikrocontroller in Schritt S4 (EXE) einen Selbsttest aus und sendet das Testergebnis an den Steuerrechner 2 bzw. fordert vom Steuerrechner den neuen Programmcode an, der diesen daraufhin in den nichtflüchtigen Speicher des Mikrocontrollers schreibt. Nach Abschluß des Selbsttestes bzw. des Downloads von Programmcode überführt der Mikrocontroller in schritt S5 die Watchdog-Schaltung WD in den Modus W1 und in Schritt S6, der vorzugsweise im wesentlichen gleichzeitig oder aber später ausgeführt wird, die periphere(n) Einheit(en) PE in den Modus P1, so daß die Aktoren wieder normal vom Mikrocontroller über die peripheren Einheiten angesteuert werden, damit z.B. die Scheibenwischer ihren Dienst versehen können.

Die peripheren Einheiten werden also zumindest immer dann im Betriebsmodus P2 betrieben, wenn sich die watchdog-Schaltung im Betriebsmodus herabgesetzter Aktivität W2 befindet (in Fig. 3 von Schritt S3 bis inkl. Schritt S4), ggf. aber auch in weiteren Zeitabschnitten (ab Schritt S2 und bis inkl. Schritt S5), in denen sich die watchdog-Schaltung im normalen Betriebsmodus W1 befindet. Im Modus P1 werden die peripheren Einheiten allenfalls dann betrieben, wenn sich die Watchdog-Schaltung im aktiven Betriebsmodus W1 befindet (vor S3 und ab S5). Auf diese Art und weise ist sichergestellt, daß ein Download von neuem Programmcode bzw. ein Selbsttest des Mikrocontrollers nur dann durchgeführt wird (S4), wenn sich die periphere(n) Einheit(en) PE im Modus P2 bzw. die Aktoren in einem sicheren Zustand befinden.

Im Betriebsmodus P2 (S2-S5) reagiert/en die periphere(n) Einheit(en) vorzugsweise ausschließlich auf genau ein vorbestimmtes Kommando und wechselt/n in den Betriebsmodus P1 (S6), wenn sie das vorbestimmte Kommando empfängt/empfangen. Hierdurch werden Fehlansteuerungen der Aktoren infolge von undefinierten Kommandos/Signalen von Mikrocontroller z.B. während des Selbsttestes oder Downloads ausgeschlossen.

### Bezugszeichenliste

- 1: Kraftfahrzeug
- 2: übergeordneter Steuerrechner; Zentralsteuergerät
- 3: serieller Steuerungsbus (LIN, CAN)
- 4a, 4b: Baugruppe (Steuergerät) zur Steuerung eines Scheibenwischers
- 5a, 5b: Frontscheibenwischer
- 10: Schaltungsanordnung
- 11: Interface; Schnittstelle; Pegelumsetzer
- 12: Mikrocontroller, Mikroprozessor
- 13: Watchdog-Schaltung
- 14: periphere Einheit
- 15: Aktor
- 16: Baugruppe, Steuergerät

- µC: Mikrocontroller, Mikroprozessor
- ASIC: application specific integrated circuit
- ASSP: application specific standard product
- CAN: controller area network (serieller Steuerungsbus)
- EXE: execute
- IC: integrated circuit
- IF: Interface; Schnittstelle; Pegelumsetzer
- LIN: local interconnect network (serieller Steuerungsbus)
- m: Anzahl der Aktoren
- n: Anzahl der peripheren Einheiten
- P1, P2: Betriebsmodi der peripheren Einheit
- PE: periphere Einheit(en)
- PE1, PE2, ...: periphere Einheit
- REQ: request
- S1, S2, ...: verfahrensschritte
- W1: aktiver Betriebsmodus der Watchdog-Schaltung
- W2: Betriebsmodus herabgesetzter Aktivität der Watchdog-Schaltung
- WD: Watchdog-Schaltung

## Patentansprüche

1. Schaltungsanordnung (10) zum Steuern mindestens eines Aktors (15) in einem Kraftfahrzeug, beinhaltend:
a) einen Mikrocontroller (12),
b) eine Watchdog-Schaltung (13) mit einem aktiven Betriebsmodus (W1) zum Überwachen der Funktionsfähigkeit des Mikrocontrollers (12) und einem Betriebsmodus herabgesetzter Aktivität (W2),
c) mindestens eine vom Mikrocontroller gesteuerte periphere Einheit (14) mit einem ersten Betriebsmodus (P1) zum Steuern mindestens eines Aktors (15),
**dadurch gekennzeichnet, daß**
d) die periphere Einheit (14) einen zweiten Betriebsmodus (P2) aufweist und ausgebildet ist, den Aktor (15) in einen sicheren Zustand zu überführen und/oder ihn in diesem zu halten, wenn sich die periphere Einheit (14) im zweiten Betriebsmodus (P2) befindet, und
e) die Schaltungsanordnung (10) ausgebildet ist, die periphere Einheit (14) zumindest immer dann im zweiten Betriebsmodus (P2) zu betreiben, wenn sich die Watchdog-Schaltung (13) im Betriebsmodus herabgesetzter Aktivität (W2) befindet.

2. Schaltungsanordnung nach Anspruch 1, **dadurch gekennzeichnet, daß** sie ausgebildet ist, die periphere Einheit (14) spätestens dann in den zweiten Betriebsmodus (P2) zu überführen, wenn die Watchdog-Schaltung (13) in den Betriebsmodus herabgesetzter Aktivität (W2) überführt ist.

3. Schaltungsanordnung nach Anspruch 1 oder 2, **dadurch gekennzeichnet, daß** sie ausgebildet ist, die periphere Einheit (14) allenfalls dann im ersten Betriebsmodus (P1) zu betreiben, wenn sich die Watchdog-Schaltung (13) im aktiven Betriebsmodus (W1) befindet.

4. Schaltungsanordnung nach einem der vorhergehenden Ansprüche, **dadurch gekennzeichnet, daß** sie ausgebildet ist, die periphere Einheit (14) frühestens dann in den ersten Betriebsmodus (P1) zu überführen, wenn die Watchdog-Schaltung (13) in den aktiven Betriebsmodus (W1) überführt ist.

5. Schaltungsanordnung nach einem der vorhergehenden Ansprüche, **dadurch gekennzeichnet, daß** der Mikrocontroller (12) ausgebildet ist, die periphere Einheit (14) vom ersten (P1) zum zweiten (P2) oder/und vom zweiten (P2) zum ersten (P1) Betriebsmodus zu überführen.

6. Schaltungsanordnung nach einem der vorhergehenden Ansprüche, **dadurch gekennzeichnet, daß** die Watchdog-Schaltung (13) ausgebildet ist, die periphere Einheit (14) vom ersten (P1) zum zweiten (P2) oder/und vom zweiten (P2) zum ersten (P1) Betriebsmodus zu überführen.

7. Schaltungsanordnung nach einem der vorhergehenden Ansprüche, **dadurch gekennzeichnet, daß** der Mikrocontroller (12) ausgebildet ist, die Watchdog-Schaltung (13) vom aktiven Betriebsmodus (W1) in den Betriebsmodus herabgesetzter Aktivität (W2) und umgekehrt zu überführen.

8. Schaltungsanordnung nach einem der vorhergehenden Ansprüche, **dadurch gekennzeichnet, daß** der Mikrocontroller (12) ausgebildet ist, die Watchdog-Schaltung (13) auf Veranlassung eines übergeordneten Steuerrechners (2) vom aktiven Betriebsmodus (W1) in den Betriebsmodus herabgesetzter Aktivität (W2) zu überführen.

9. Schaltungsanordnung nach einem der vorhergehenden Ansprüche, **dadurch gekennzeichnet, daß** der Mikrocontroller (12) über einen seriellen Steuerungsbus, insbesondere einen LIN- oder CAN-Bus, mit einem übergeordneten Steuerrechner (2) verbunden ist.

10. Schaltungsanordnung nach einem der Ansprüche 8 oder 9, **dadurch gekennzeichnet, daß** sie in einem Kraftfahrzeug, jedoch nicht in räumlicher Nähe zum übergeordneten Steuerrechner (2) angeordnet ist.

11. Schaltungsanordnung nach einem der vorhergehenden Ansprüche, **dadurch gekennzeichnet, daß** sie in räumlicher Nähe zu einem Aktor angeordnet ist.

12. Schaltungsanordnung nach einem der vorhergehenden Ansprüche, **dadurch gekennzeichnet, daß** der Mikrocontroller (12) ausgebildet ist, neuen Programmcode nur dann abzuspeichern, wenn sich die Watchdog-Schaltung (13) im Betriebsmodus herabgesetzter Aktivität (W2) befindet, und/oder einen Selbsttest nur dann durchzuführen, wenn sich die Watchdog-Schaltung (13) im Betriebsmodus herabgesetzter Aktivität (W2) befindet.

13. Schaltungsanordnung nach einem der vorhergehenden Ansprüche, **dadurch gekennzeichnet, daß** die Watchdog-Schaltung (13) ausgebildet ist, im Betriebsmodus herabgesetzter Aktivität (W2) die Funktionsfähigkeit des Mikrocontrolles (12) nicht oder im Vergleich zum aktiven Betriebsmodus (W1) weniger genau zu überwachen.

14. Schaltungsanordnung nach einem der vorhergehenden Ansprüche, **dadurch gekennzeichnet, daß** die periphere Einheit (14) ausgebildet ist,
a) ausschließlich auf genau ein vorbestimmtes Kommando zu reagieren, wenn sie sich im zweiten Betriebsmodus (P2) befindet, und
b) in den ersten Betriebsmodus (P1) zu wechseln, wenn sie das vorbestimmte Kommando empfängt.

15. Schaltungsanordnung nach einem der vorhergehenden Ansprüche, **dadurch gekennzeichnet, daß** die periphere Einheit (14) als Treiberschaltung zum Steuern des Aktors (15) ausgebildet ist.

16. Schaltungsanordnung nach einem der vorhergehenden Ansprüche, **dadurch gekennzeichnet, daß** der Aktor (15) als Elektromotor, Elektromagnet oder Heizdraht ausgebildet ist.

17. Schaltungsanordnung nach einem der vorhergehenden Ansprüche, **dadurch gekennzeichnet, daß** der Aktor (15) ausgestaltet ist, im sicheren Zustand keine Schäden, Störungen oder Fehlfunktionen zu verursachen.

18. Verfahren zum Steuern mindestens eines Aktors in einem Kraftfahrzeug mit einem Mikrocontroller, einer Watchdog-Schaltung mit einem aktiven Betriebsmodus (W1) zum Überwachen der Funktionsfähigkeit des Mikrocontrollers und einem Betriebsmodus herabgesetzter Aktivität (W2), und mit mindestens einer vom Mikrocontroller gesteuerten peripheren Einheit mit einem ersten Betriebsmodus (P1) zum steuern mindestens eines Aktors, beinhaltend die Schritte:
a) Betreiben (S2-S5) der peripheren Einheit in einem zweiten Betriebsmodus (P2) zumindest immer dann, wenn sich die watchdog-Schaltung im Betriebsmodus herabgesetzter Aktivität (W2) befindet (S3-S4), und
b) Überführen und/oder Halten des Aktors in einen/einem sicheren Zustand, wenn sich die periphere Einheit im zweiten Betriebsmodus (P2) befindet (S2-S5).

19. Verfahren nach Anspruch 18, **dadurch gekennzeichnet, daß** die periphere Einheit spätestens dann in den zweiten Betriebsmodus (P2) überführt wird (S2), wenn die Watchdog-Schaltung in den Betriebsmodus herabgesetzter Aktivität (W2) überführt ist (S3).

20. Verfahren nach Anspruch 19, **dadurch gekennzeichnet, daß** die periphere Einheit in den zweiten Betriebsmodus (P2) überführt wird (S2), bevor die Watchdog-Schaltung in den Betriebsmodus herabgesetzter Aktivität (W2) überführt ist (S3)

21. Verfahren nach einem der Ansprüche 18 bis 20, **dadurch gekennzeichnet, daß** die periphere Einheit allenfalls dann im ersten Betriebsmodus (P1) betrieben wird (S6, S1), wenn sich die Watchdog-Schaltung im aktiven Betriebsmodus (W1) befindet (S5, S6, S1, S2).

22. Verfahren nach einem der Ansprüche 18 bis 21, **dadurch gekennzeichnet, daß** die periphere Einheit frühestens dann in den ersten Betriebsmodus (P1) überführt wird (S6), wenn die Watchdog-Schaltung in den aktiven Betriebsmodus (W1) überführt ist (S5).

23. Verfahren nach Anspruch 22, **dadurch gekennzeichnet, daß** die periphere Einheit im wesentlichen dann in den ersten Betriebsmodus (P1) überführt wird (S6), wenn die Watchdog-Schaltung in den aktiven Betriebsmodus (W1) überführt wird (S5).

24. Verfahren nach einem der Ansprüche 18 bis 23, **dadurch gekennzeichnet, daß** neuer Programmcode für den Mikrocontroller nur dann abgespeichert wird (S4), wenn sich die watchdog-Schaltung im Betriebsmodus herabgesetzter Aktivität (W2) befindet, und/oder ein Selbsttest des Mikrocontrollers nur dann durchgeführt wird (S4), wenn sich die watchdog-Schaltung im Betriebsmodus herabgesetzter Aktivität (W2) befindet.

25. Verfahren nach einem der Ansprüche 18 bis 24 **dadurch gekennzeichnet, daß** die periphere Einheit ausschließlich auf genau ein vorbestimmtes Kommando reagiert, wenn sie sich im zweiten Betriebsmodus (P2) befindet (S2-S5), und in den ersten Betriebsmodus (P1) wechselt (S6), wenn sie das vorbestimmte Kommando empfängt.
